# EUROPÄISCHE PATENTSCHRIFT

(11) **EP 4 263 392 B1**
(45) Veröffentlichungstag und Bekanntmachung des Hinweises auf die Patenterteilung: **11.11.2026**
(21) Anmeldenummer: 21840587.6
(22) Anmeldetag: 17.12.2021
(51) Int. Cl.: B65G 1/127, B65G 1/137

(54) **UMLAUFREGAL MIT EINER ANZEIGEVORRICHTUNG FÜR LAGERGUT UND EIN VERFAHREN ZUM KOMMISSIONIEREN MITTELS EINES DERARTIGEN UMLAUFREGALS**
CAROUSEL WITH A DISPLAY DEVICE FOR STORED ARTICLES AND A PICKING METHOD USING A CAROUSEL OF THIS KIND
CARROUSEL DOTÉ D'UN DISPOSITIF D'AFFICHAGE POUR ARTICLES STOCKÉS ET PROCÉDÉ DE PRÉLÈVEMENT DE STOCK UTILISANT UN CARROUSEL DE CE TYPE

(30) Priorität: 22.12.2020 DE 102020134617
(43) Veröffentlichungstag der Anmeldung: 25.10.2023
(73) Patentinhaber: Hänel GmbH & Co. KG, 74177 Bad Friedrichshall (DE)
(72) Erfinder: GRUBER, Tim, 74177 Bad Friedrichshall (DE)
(74) Vertreter: Flügel Preissner Schober Seidel
(86) Internationale Anmeldenummer: PCT/EP2021/086458
(87) Internationale Veröffentlichungsnummer: WO 2022/136160

(56) Entgegenhaltungen:
- EP-A1- 1 258 438
- CN-A- 103 193 050
- DE-A1- 102018 221 074
- DE-A1- 3 401 493
- DE-U1- 9 301 327
- JP-A- H04 286 507
- JP-U- H 072 312
- US-A1- 2015 213 695
- US-A1- 2018 354 719
- US-A1- 2019 300 284

## Beschreibung

Die Erfindung betrifft ein Umlaufregal und ein Verfahren zum Kommissionieren von Lagergut in oder aus dem Umlaufregal.

Derartige Umlaufregale, die auch als Paternoster bezeichnet werden, sind bekannt und dienen zur platz- und zeitsparenden Unterbringung von Gütern aller Art, wie beispielsweise Büromaterialien oder anderer Lagergüter. Der geringe Platzbedarf ergibt sich insbesondere dadurch, dass sich die umlaufenden Tragsätze direkt hinter der Zugangsöffnung befinden, auf welchen die darauf gelagerten Lagergüter gelagert sind. Ein Bediener kann dadurch unmittelbar Lagergut, das auf dem Tragsatz gelagert ist, kommissionieren.

Hingegen ist bei Vertikalliften, die eine Vielzahl von Regaleinheiten aufweisen, welche übereinander liegende und beabstandete Trägerauflagen für Lagergutträger umfassen, die paarweise an sich gegenüberliegenden Seitenwänden der Regaleinheiten zur Bildung eines Lagerplatzes angeordnet sind, generell ein Zugangsbereich vorgesehen. Dieser Zugangsbereich weist die gleiche Tiefe wie die Regaleinheit auf. Zum Verfahren der Lagergutträger weisen derartige Lagerregale eine zwischen den Regaleinheiten in vertikaler Richtung verfahrbare Transporteinrichtung auf. Ein derartiges Lagerregal ist beispielsweise aus DE 10 2005 048 379 A1 bekannt.

JP H07 2312 U**,** welche die Merkmale des Oberbegriffs des Anspruchs 1 offenbart, zeigt insbesondere ein Umlaufregal, das ein Gehäuse aufweist, in dem zur Lagerung von Lagergut eine Vielzahl von Tragsätzen aufgenommen sind. Die Tragsätze sind mittels einer umlaufenden Transportvorrichtung mindestens einer im Gehäuse vorgesehenen Zugangsöffnung zustellbar. Weiterhin ist eine Anzeigeeinrichtung mit mehreren Indikatoren vorgesehen, die versetzt zueinander entlang der Breite der Zugangsöffnung angeordnet sind. Die Anzeigeeinrichtung dient zur Feststellung, ob ein Lagergutträger dem Umlaufregal entnommen oder zugestellt wurde. Hierbei wird bei der Entnahme eines Lagergutträgers das emittierte Licht vom Boden des Lagegutträgers reflektiert und über die Lichtöffnung dem Lichtsensor zugeleitet.

DE 34 01 493 A1 offenbart ein Umlaufregal mit einer Positionsanzeigevorrichtung. Die Anzeigevorrichtung weist einen L-förmigen Querschnitt mit einem Führungskanal für Positionsleuchten auf, die individuell aktivierbar sind. Die Positionsleuchten sind mit Abstand zueinander in eine nutförmige Aussparung des Führungskanals eingesetzt.

CN 103 193 050 A offenbart ein Umlaufregal mit einem Gehäuse, in dem zur Lagerung von Lagergut eine Vielzahl von Tragsätzen aufgenommen sind. Oberhalb der Bedienöffnung ist eine Positionsleuchte angeordnet, die die Position des Lagergutes anzeigt. Diese Positionsleuchte kann als Vielfach-Laserleuchte oder als schwenkbare Leuchte ausgebildet sein.

Ein weiteres Umlaufregal mit einer Anzeigevorrichtung ist aus DE 9301327 U1 bekannt. Hierbei ist jedoch die Anzeigevorrichtung in einem von einer Vorderseite des Umlaufregals hervorstehendem Gehäuse angeordnet. Die Anzeigevorrichtung ist derart ausgestaltet, dass diese Lagergüter oder Lagergutbehälter nicht auf dem umlaufenden Tragsatz anzeigen kann. Vielmehr muss der Lagergutbehälter zunächst aus dem Tragsatz entnommen werden, um von der Anzeigevorrichtung erfasst zu werden.

Ausgehend hiervon liegt der Erfindung die Aufgabe zugrunde, bei einem Umlaufregal die Kommissionierung von Lagergut zu erleichtern.

Zur Lösung dieser Aufgabe wird ein Umlaufregal gemäß Patentanspruch 1 und ein Verfahren gemäß Patentanspruch 11 vorgeschlagen. Vorteilhafte Ausgestaltungen sind Gegenstand der jeweils abhängigen Ansprüche.

Das erfindungsgemäße Umlaufregal umfasst ein Gehäuse, in dem zur Lagerung von Lagergut eine Vielzahl von Tragsätzen aufgenommen ist. Die Tragsätze sind mittels einer umlaufenden Transportvorrichtung mindestens einer im Gehäuse vorgesehenen Zugangsöffnung zustellbar. Ferner weist das Umlaufregal eine Arbeitsplatte mit einer Arbeitsfläche auf, die vor der Zugangsöffnung angeordnet ist.

Unterhalb der Arbeitsfläche befindet sich eine Anzeigevorrichtung, die im Wesentlichen entlang der Breite der Zugangsöffnung angeordnet ist. In einer alternativen Ausgestaltung ist die Anzeigevorrichtung entlang der Breite der Zugangsöffnung verfahrbar. Die Anzeigevorrichtung ist geeignet, eine dem Bediener zugewandte Vorderseite des sich auf dem Tragsatz befindenden Lagerguts mittels eines Lichtstrahls anzustrahlen. Das erfindungsgemäße Umlaufregal zeichnet sich dadurch aus, dass die Anzeigevorrichtung schwenkbar ausgebildet ist, um den Lichtstrahl in Vertikalrichtung zu verstellen, und dass die Anzeigevorrichtung auf einer Schiene angeordnet ist, die schwenkbar in der Arbeitsplatte gelagert ist.

Bei dem erfindungsgemäßen Umlaufregal ermöglicht die Anzeigevorrichtung, die das auf dem Tragsatz befindliche Lagergut anstrahlt, eine Erleichterung beim Kommissionieren mittels einer visuellen Hilfestellung bei der Kommissionierung des Lagergutes. Die Fehlerhäufigkeit beim Kommissionieren wird dadurch reduziert. Weiterhin wird es einer Bedienperson ermöglicht, die nächsten Kommissionierungsschritte zu antizipieren, insbesondere die Position, an welcher sich das Lagergut entlang der Breite der Zugangsöffnung befinden wird. Folglich wird ein schnelleres und effektiveres Kommissionieren des Lagergutes ermöglicht. Zusätzlich zeichnet sich ein derartiges Umlaufregal dadurch aus, dass der benötigte Platzbedarf trotz einer derartigen Anzeigevorrichtung nicht erhöht wird, da keine wesentlich von einer Vorderseite hervorstehende Gehäuseabschnitte benötigt werden. Ferner können mittels einer derartigen Anzeigevorrichtung alle auf dem Tragsatz befindlichen Lagergüter in gleicher Weise angezeigt werden, da der Lichtstrahl in dem gleichen Winkel von der Anzeigevorrichtung emittiert wird.

Unter Anzeigevorrichtung im Sinne der vorliegenden Erfindung ist jedes Mittel zu verstehen, das geeignet ist, Lichtstrahlen oder Laserstrahlen zu emittieren. Ein Lagergut kann beispielsweise auch ein Behälter sein, in welchem Kleinteile oder andere Waren gelagert werden können. Das Lagergut zeichnet sich insbesondere durch eine Vorderseite aus, die von der Anzeigevorrichtung angestrahlt werden kann und dabei dem Bediener zugewandt ist. Die Vorderseite des Umlaufregals ist die Seite des Umlaufregals, welche die Zugangsöffnung aufweist.

Vor der Zugangsöffnung ist eine Arbeitsplatte mit einer Arbeitsfläche angeordnet. Die Anzeigevorrichtung ist dabei unterhalb der Arbeitsfläche angeordnet. Die Arbeitsplatte dient zum vorübergehenden Abstellen von Lagergut. Indem die Anzeigevorrichtung unterhalb der Arbeitsfläche angeordnet ist, kann ein Lagergut auf dem Tragsatz auch während des Kommissionierungsvorgangs verdeckungsfrei angestrahlt werden. Die Lichtstrahlen strahlen vorteilhaft von unten nach schräg oben. Während eine Bedienperson auf ein Lagergut zugreift, werden die Lichtstrahlen beim Kommissionieren nicht unterbrochen, sodass das angestrahlte Lagergut verdeckt wird und die Vorderseite nicht mehr mittels der Anzeigevorrichtung angezeigt werden kann. Dies hat sich als besonders vorteilhaft gegenüber einer oberhalb der Arbeitsfläche oder an einer Oberseite eines Regals angebrachten Anzeigevorrichtung herausgestellt.

Die Anzeigeeinrichtung ist schwenkbar ausgebildet, um den Lichtstrahl in Vertikalrichtung zu verstellen.

Ferner ist die Anzeigeeinrichtung auf einer Schiene angeordnet, die schwenkbar in der Arbeitsplatte gelagert ist. Dabei kann auch ein elektrischer Antrieb zum Verschwenken der Anzeigeeinrichtung vorgesehen sein.

Vorteilhaft weist die Anzeigevorrichtung ein Leuchtband, insbesondere ein LED-Band, oder eine Vielzahl von LEDs auf. Das Leuchtband hat den Vorteil, dass dieses entlang der gesamten Länge der Zugangsöffnung angebracht werden kann und LEDs einen nur sehr geringen Bauraum benötigen. Folglich kann mittels eines derartigen Leuchtbands zugleich ein Lagergut auf der einen Seite der Zugangsöffnung als auch auf der anderen Seite der Zugangsöffnung in gleicher Weise angestrahlt werden. Die Anzeigevorrichtung, das Leuchtband sowie die LEDs können des Weiteren derart ausgebildet sind, dass diese Lichtstrahlen in unterschiedlichen Farben emittieren. Weiterhin können die Lichtstrahlen auch blinkend ausgeführt werden.

Vorteilhaft weist die Anzeigevorrichtung mindestens ein Leuchtsegment auf, welches einheitliche Lichtstrahlen emittiert. Ferner ist zweckmäßigerweise jedes Leuchtsegment individuell aktivierbar. Ein Leuchtsegment kann ein Teilbereich des Leuchtbands sein. Das Leuchtsegment ist dadurch gekennzeichnet, dass die Vorderseite des Lagerguts im Wesentlichen gleichmäßig ausgeleuchtet wird. Indem jedes Leuchtsegment individuell aktivierbar ist, kann ein Leuchtsegment unabhängig von dem nicht-aktivierten Bereich angesteuert werden, um beispielsweise nur die Vorderseite eines bestimmten Lagerguts anzustrahlen.

In einer vorteilhaften Ausgestaltung hiervon umfasst die Anzeigevorrichtung mindestens zwei aktivierbare Leuchtsegmente. Dies schließt insbesondere drei, vier oder ein Vielzahl an Leuchtsegmenten ein. Die emittierten Lichtstrahlen der mindestens zwei aktivierbaren Leuchtsegmente weisen dabei unterschiedliche Farben auf. Einer Bedienperson kann somit eine weitere Information vermittelt werden, indem beispielsweise eine grüne Farbe den aktuell zu bearbeitenden Auftrag und eine rote Farbe den folgenden zu bearbeitenden Auftrag anzeigt.

Vorteilhaft weist die Anzeigevorrichtung einen LED-Spot oder einen Laser-Spot auf, der mittels eines Antriebs entlang der Breite der Zugangsöffnung verfahrbar ist. Die Anzeigevorrichtung kann oberhalb oder unterhalb der Zugangsöffnung angeordnet sein. Eine derartige Anzeigevorrichtung zeichnet sich durch einen besonders hohen Lumenwert aus. Dadurch kann eine hohe Lichtmenge abgestrahlt werden und somit ein Lagergut in einer bereits gut ausgeleuchteten Lagerhalle deutlich hervorgehoben werden. Hierbei können auch mehrere LED-Spots oder Laser-Spots mittels jeweils eines Antriebs entlang der Breite der Zugangsöffnung verfahren werden.

Mittels einer Schablone auf der Linse des LED-Spots oder Laser-Spots können verschiedene Formen eines Lichtpunktes oder eines Lichtstrahls generiert werden (beispielsweise ein Fadenkreuz, Symbol, Zahl oder Buchstabe).

In einer vorteilhaften Ausgestaltung ist zwischen den verfahrbaren Tragsätzen und der Arbeitsplatte eine Sicherheitswippe angeordnet. Zur Kennzeichnung des Lagerguts strahlen die Lichtstrahlen zwischen der Sicherheitswippe und der Arbeitsplatte hindurch. Mittels der Sicherheitswippe kann eine sichere Kommissionierung und Bedienung des Umlaufregals garantiert werden. Ein Verfahren der Tragsätze kann somit gestoppt werden, sollte ein Gegenstand in der Zugangsöffnung mit den verfahrenden Tragsätzen einklemmt werden.

Ferner ist es vorteilhaft, wenn die Anzeigevorrichtung vor einer an der Zugangsöffnung vorgesehenen Schiebetür angeordnet ist. Die Schiebetür kann derart ausgebildet sein, dass die Zugangsöffnung zumindest teilweise verschlossen wird. Eine derartige Verwendung ist insbesondere bei Umlaufregalen vorgesehen, bei denen nur ein Teilbereich entlang der Breite der Zugangsöffnung zugänglich gemacht werden soll. Indem die Anzeigevorrichtung vor der Schiebetür angeordnet ist, kann der Bedienperson angezeigt werden, an welcher Position sich ein Teilbereich der Schiebetür öffnen wird.

In einer weiteren vorteilhaften Ausgestaltung ist eine Lichtschranke vorgesehen, die ausgebildet ist, eine Position zu erfassen, an welcher eine Bedienperson entlang der Breite der Zugangsöffnung das Lagergut kommissioniert. Die Position wird insbesondere dadurch erfasst, dass die Lichtschranke an einer Position entlang der Breite der Zugangsöffnung während eines Kommissioniervorgangs unterbrochen wird. Dies kann beispielsweise erfolgen, indem die Bedienperson mit seiner Hand ein Lagergut auf dem Tragsatz ergreift. Die Lichtschranke ist hierzu ebenfalls entlang der Breite der Zugangsöffnung angeordnet.

Statt der Lichtschranke können auch Nahfeldüberwachungssysteme zur Erfassung der Position der Bedienperson entlang der Breite der Zugangsöffnung eingesetzt werden.

Vorteilhaft ist die Anzeigevorrichtung hinter einer lichtdurchlässigen Scheibe, insbesondere aus Polymethylmethacrylat, angeordnet. Eine derartige Scheibe bietet einen erhöhten Schutz der Anzeigevorrichtung vor Schmutz oder Beschädigungen.

Vorteilhaft ist die Anzeigeeinrichtung eingerichtet, um einen punktförmigen und/oder linienförmigen Lichtstrahl oder ein Anzeigesymbol zu erzeugen.

Das erfindungsgemäße Verfahren zeigt vorteilhaft eine erste Position eines Lagerguts und zumindest eine zweite Position eines anderen Lagerguts zeitgleich oder nacheinander an. Folglich kann somit einer Bedienperson eine weitere Information angezeigt werden, wie beispielsweise an welcher Position sich das nächste zu entnehmende Lagergut auf dem Tragsatz befindet. Hierzu ist es auch denkbar, dass eine dritte, vierte oder eine Vielzahl an Positionen angezeigt wird.

Vorteilhaft wird die erste Position mit einer ersten Farbe gekennzeichnet und die zweite Position mit einer zu der ersten Farbe unterschiedlichen zweiten Farbe gekennzeichnet. Die Verwendung von unterschiedlichen Farben ermöglicht eine besonders intuitive und schnell ersichtliche Unterscheidung der verschiedenen Positionen. Soll eine dritte Position oder weitere Positionen angezeigt werden, können diese mit jeweils einer weiteren unterschiedlichen Farben angezeigt werden.

Mittels unterschiedlicher Farbkennzeichnung können Lagergüter auf dem gleichen Tragsatz unterschiedlichen Kommissioniervorgängen oder Kommissionieraufträgen zugeordnet werden, so dass eine schnellere Bearbeitung von mehreren Vorgängen erfolgen kann.

Vorteilhaft wird die Position entlang der Breite der Zugangsöffnung, an welcher die Bedienperson den Kommissioniervorgang durchführt, mittels der Lichtschranke erfasst. Die erfasste Position wird anschließend an ein Steuergerät übermittelt.

Weiter vorteilhaft vergleicht das Steuergerät die Position entlang der Breite der Zugangsöffnung, an welcher die Bedienperson den Kommissioniervorgang durchführt, mit der angezeigten Position. Der Bedienperson wird anschließend mittels eines Anzeigesignals der Anzeigevorrichtung angezeigt, ob die Position entlang der Breite der Zugangsöffnung zutreffend ist. Ein Anzeigesignal besteht aus Lichtstrahlen der Anzeigevorrichtung, welche auch blinkend ausgeführt werden können. Das beschriebene Verfahren ermöglicht ein quittieren des Kommissioniervorgangs. Ferner kann der Bedienperson unmittelbar angezeigt werden, ob er das richtige Lagergut entnimmt. Ein Fehler bei der Kommissionierung von Lagergut kann somit deutlich reduziert werden.

Nachfolgend wird die Erfindung anhand von Ausführungsbeispielen und vorteilhafte Ausgestaltungen näher erläutert, die in den Figuren schematisch dargestellt sind. Hierbei zeigen:
- Fig.1: ein erfindungsgemäßes Umlaufregal in perspektivischer Darstellung;
- Fig.2: einen Schnitt entlang der Schnittlinie II-II in Fig. 1;
- Fig.3: eine Seitenansicht entlang der Breite der Zugangsöffnung;
- Fig.4: eine Draufsicht auf eine Vorderseite des Umlaufregals;
- Fig.5: eine Draufsicht auf eine Vorderseite eines Umlaufregals gemäß einem nicht erfindungsgemäßen Beispiel;
- Fig.6: eine Draufsicht auf eine Vorderseite eines Umlaufregals gemäß einer zweiten Ausführungsform;
- Fig.7: eine weitere Ausführungsform mit einer schwenkbaren Anzeigeeinrichtung; und
- Fig. 8: eine Draufsicht auf eine weitere Ausführungsform mit einer Anzeigeeinrichtung zum Generieren von Anzeigesymbolen.

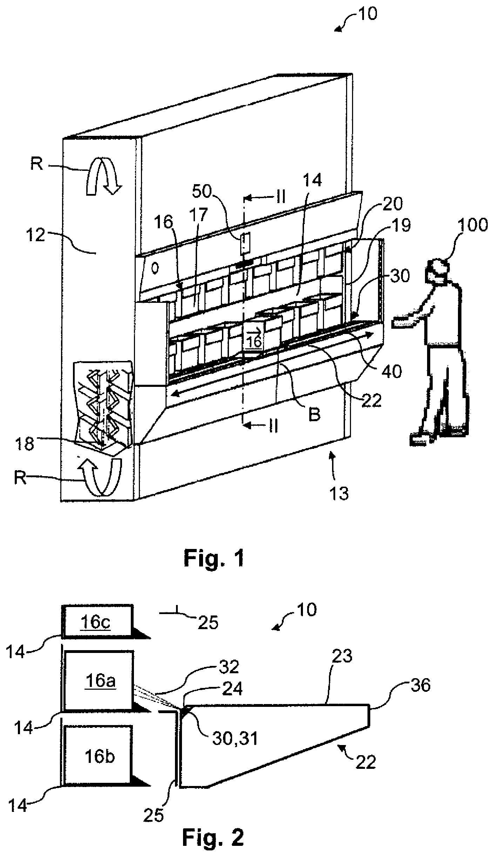

Fig. 1 zeigt ein Umlaufregal 10 mit einem Gehäuse 12, in dem zur Lagerung von Lagergut 16 eine Vielzahl von Tragsätzen 14 aufgenommen ist. Das Lagergut 16 liegt als Behälter vor, in dem diverse Lagerartikel aufgenommen sind. Die Tragsätze 14 sind mittels einer umlaufenden Transportvorrichtung 18 mindestens einer im Gehäuse 12 vorgesehenen Zugangsöffnung 20 zustellbar.

Entlang der Breite B der Zugangsöffnung 20 ist eine Anzeigevorrichtung 30 in Form eines Leuchtbands, welche eine Vielzahl an LEDs aufweist, angeordnet. Die Anzeigevorrichtung 30 ist geeignet, eine Vorderseite 17 des Lagerguts 16 mittels eines Lichtstrahls 32 anzustrahlen.

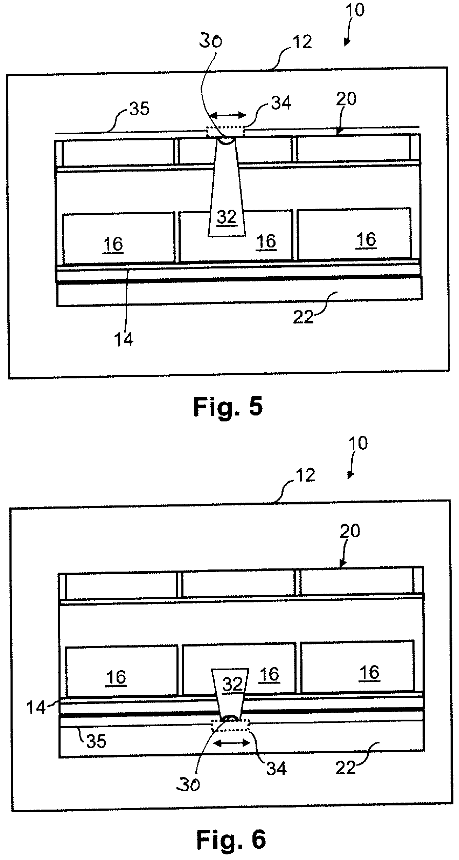

Fig. 5 und Fig. 6 zeigen eine alternative Ausgestaltung des Umlaufregals 10. Die in den Figuren 5 und 6 dargestellten Anzeigevorrichtungen 30 sind in Form eines LED-Spots oder Laser-Spots ausgebildet und entlang der Breite B der Zugangsöffnung 20 mittels eines Antriebs 34 verfahrbar. Der Antrieb 34 ist auf einer Schiene 34 geführt und in Richtung des in Fig. 5 und Fig. 6 gezeigten Doppelpfeils beweglich angeordnet. In Fig. 5 ist die dargestellte Anzeigevorrichtung 30 oberhalb der Zugangsöffnung 20 und in Fig. 6 unterhalb der Zugangsöffnung 20 angeordnet.

Das Gehäuse 12 hat eine die Zugangsöffnung 20 umfassende Vorderseite 13, die einer Bedienperson 100 zugewandt ist. Zum temporären Abstellen von Lagergut 16 beim Ein-und Auslagern weist das Umlaufregal 10 an der Vorderseite 13 eine Arbeitsplatte 22 mit einer Arbeitsfläche 23 auf. Die Arbeitsfläche 23 ist im Wesentlichen bündig mit einer unteren Kante der Zugangsöffnung 20 ausgebildet. Die Anzeigevorrichtung 30 ist hinter einer lichtdurchlässigen Scheibe 24 angeordnet, die in Fig. 2 gezeigt ist.

Die Arbeitsplatte 22 weist in einem der Bedienperson 100 zugewandten Bereich eine Lichtschranke 40 entlang der Breite B der Zugangsöffnung 20 auf. Die Lichtschranke 40 ist mit einem Steuergerät 50 zur Übertragung von Daten verbunden. Das Steuergerät 50 dient zur Steuerung des Umlaufregals und kann mit einem elektronischen Datenverwaltungssystem (EDV-System) der Lagerlogistik verbunden werden.

Die Lichtschranke 40 ist bevorzugt im Bauraum der Anzeigevorrichtung verbaut. Hierdurch können unbeabsichtigte Fehlauslösungen verhindert werden. In Fig.1 ist die Lichtschranke in der Arbeitsplatte 22 von oben dargestellt.

Die Funktion der Lichtschranke kann in einer alternativen Ausgestaltung auch durch Reflexionslichtschranken, Sensoren oder Annäherungssensoren erreicht werden.

Zum Verschließen von zumindest einem Teilbereich der Zugangsöffnung 20 ist des Weiteren eine Schiebetür 19 vorgesehen.

In Fig. 2 ist die Anordnung der Anzeigevorrichtung 30 unterhalb der Arbeitsfläche 23 gezeigt. Zwischen der Arbeitsplatte 22 und den verfahrbaren Tragsätzen 14 ist eine Schiebetüre samt Sicherheitswippe 25 im Bereich einer oberen und einer unteren Kante der Zugangsöffnung 20 angeordnet.

Die Arbeitsplatte 22 weist ferner einen weiteren Abschnitt 36 auf. An diesem Abschnitt 36 kann eine Schriftanzeigevorrichtung angebracht sein, die eine Information durch Anzeigen von beispielsweise eines Texts übermittelt.

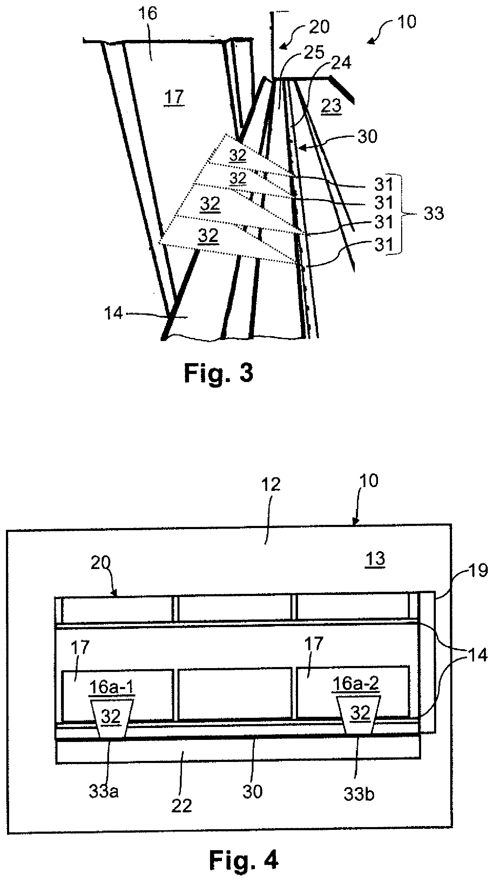

Fig. 3 zeigt die Anzeigevorrichtung 30 in der Ausgestaltung eines LED- Bands. Das LED-Band weist eine Vielzahl an LEDs 31 auf. In der gezeigten Ausführungsform sind vier LEDs 31 aktiviert, welche gemeinsam ein Leuchtsegment 33 bilden. Die aktivierten LEDs 31 des Leuchtsegments 33 strahlen mittels den Lichtstrahlen 32 eine Vorderseite 17 des Lagerguts 16 gleichmäßig an.

In Fig. 4 ist gezeigt, wie eine erste Position 16a-1 eines Lagerguts und eine zweite Position 16a-2 eines anderen Lagerguts angezeigt wird. Zum Anzeigen der ersten Position 16a-1 ist ein erstes Leuchtsegment 33a aktiviert und zum Anzeigen der zweiten Position 16a-2 ist ein zweites Leuchtsegment 33b der Anzeigevorrichtung 33 aktiviert. Beide Leuchtsegmente 33a, 33b sind Bestandteil des LED-Bands das ebenfalls in Fig. 3 gezeigt ist.

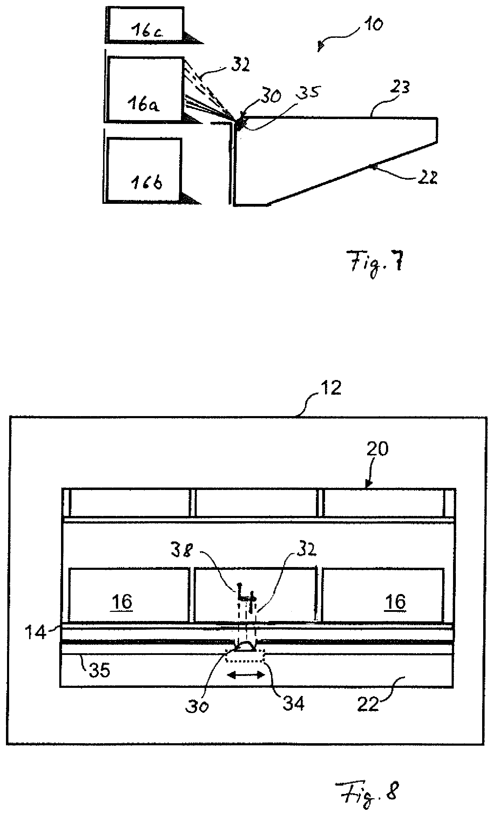

Fig. 7 zeigt eine Ausführungsvariante , bei der die Anzeigevorrichtung 30 schwenkbar in der Arbeitsplatte 22 gelagert ist. Die Anzeigeeinrichtung 30 kann dabei als LED-Band oder als ein LED-Spot oder Laser-Spot ausgebildet sein, der mittels eines Antriebes 34 verfahrbar ist, wie vorstehend beschrieben wurde. Die schwenkbare Anzeigevorrichtung 30 ermöglicht eine Verstellung des Lichtstrahles 32 in der Vertikalrichtung, wie dies in Fig. 7 gezeigt ist. Die Anzeigevorrichtung 30 ist auf einer Schiene 35 angeordnet, die schwenkbar an der Arbeitsplatte 22 gelagert ist. Das Verschenken kann mechanisch oder auch mittels eines nicht dargestellten Antriebes erfolgen.

Bei der in Fig. 8 dargestellten Ausführungsform kann die Anzeigeeinrichtung 30 einen punktförmigen und/oder linienförmigen Lichtstrahl 32 oder ein Anzeigesymbol 38, insbesondere eine Ziffer oder einen Buchstaben, generieren. Hiermit kann beispielsweise auf dem Lagergut 16 die zu entnehmende Menge angezeigt werden.

Zum Kommissionieren von Lagerguts 16 in oder aus dem Umlaufregal 10 übergibt die Bedienperson 100 einen Kommissioniervorgang an das Steuergerät 50. Der Kommissioniervorgang wird an die Steuervorrichtung 50 übermittelt, welches das zugeordnete Lagergut 16a bestimmt. Die über die Steuervorrichtung 50 gesteuerte Transportvorrichtung 18 verfährt anschließend die Tragsätze 14 in umlaufender Weise entlang der in Fig. 1 gezeigten Richtung R, oder entgegengesetzt, bis das bestimmte Lagergut 16a über die Zugangsöffnung 20 zugänglich ist. Anschließend wird die Position des Lagerguts 16a entlang der Breite der Zugangsöffnung 20 mittels der Anzeigevorrichtung 30 angezeigt, wie es in Fig. 1 bis Fig. 4 sowie in Fig. 5 dargestellt ist.

Alle Ausführungsvarianten des Das erfindungsgemäßen Umlaufregals 10 zeichnen sich besonders durch eine einfach Bedienung aus, die in intuitiver Weise die Position des Lagerguts 16 entlang der Breite B der Zugangsöffnung 20 mittels eines Lichtstrahls 32 anzeigt. Die Dauer eines Kommissioniervorgangs und vor allem mehrerer Kommissioniervorgänge kann dadurch deutlich reduziert werden.

**Bezugszeichenliste**

| | | | |
|---|---|---|---|
| 10 | Umlaufregal | 25 | Sicherheitswippe |
| 12 | Gehäuse | 30 | Anzeigevorrichtung |
| 13 | Vorderseite | 31 | LED |
| 14 | Tragsatz | 32 | Lichtstrahl |
| 16 | Lagergut | 33 | Leuchtsegment |
| 16a | Lagergut | 33a | erstes Leuchtsegment |
| 16b | Lagergut | 33b | zweites Leuchtsegment |
| 16c | Lagergut | 34 | Antrieb |
| 16a-1 | erste Position des Lagerguts | 35 | Schiene |
| 16a-2 | zweite Positionen des Lagerguts | 36 | Vorderseite der Arbeitsplatte |
| | | 38 | Anzeigesymbol |
| 17 | Vorderseite | 40 | Lichtschranke |
| 18 | Transportvorrichtung | 50 | Steuergerät |
| 19 | Schiebetür | 100 | Bedienperson |
| 20 | Zugangsöffnung | | |
| 22 | Arbeitsplatte | B | Breite |
| 23 | Arbeitsfläche | R | Umlaufrichtung |
| 24 | lichtdurchlässige Scheibe | | |

## Patentansprüche

1. Umlaufregal (10) mit einem Gehäuse (12), in dem zur Lagerung von Lagergut (16) eine Vielzahl von Tragsätzen (14) aufgenommen ist, die mittels einer umlaufenden Transportvorrichtung (18) mindestens einer im Gehäuse (12) vorgesehenen Zugangsöffnung (20) zustellbar sind, eine Arbeitsplatte (22) mit einer Arbeitsfläche (23), die vor der Zugangsöffnung angeordnet ist, eine unterhalb der Arbeitsfläche (23) angeordnete Anzeigevorrichtung (30), die im Wesentlichen entlang der Breite (B) der Zugangsöffnung (20) angeordnet ist oder entlang der Breite (B) der Zugangsöffnung (20) verfahrbar ist, wobei die Anzeigevorrichtung (30) geeignet ist, eine dem Bediener zugewandte Vorderseite (17) des sich auf dem Tragsatz (14) befindenden Lagerguts (16) mittels eines Lichtstrahls (32) anzustrahlen, **dadurch gekennzeichnet, dass** die Anzeigevorrichtung (30) schwenkbar ausgebildet ist, um den Lichtstrahl (32) in Vertikalrichtung zu verstellen, und dass die Anzeigevorrichtung (30) auf einer Schiene (35) angeordnet ist, die schwenkbar in der Arbeitsplatte (2) gelagert ist.

2. Umlaufregal (10) nach Anspruch 1, **dadurch gekennzeichnet, dass** die Anzeigevorrichtung (30) ein Leuchtband, insbesondere ein LED-Band, oder eine Vielzahl von LEDs (31) aufweist.

3. Umlaufregal (10) nach Anspruch 1 oder 2, **dadurch gekennzeichnet, dass** die Anzeigevorrichtung (30) mindestens ein Leuchtsegment (33) aufweist, welches einheitliche Lichtstrahlen (32) emittiert, und wobei vorzugsweise jedes Leuchtsegment (33) individuell aktivierbar ist.

4. Umlaufregal (10) nach Anspruch 3, **gekennzeichnet durch** mindestens zwei aktivierbare Leuchtsegmente (33a, 33b), wobei die Lichtstrahlen (32) der mindestens zwei aktivierbaren Leuchtsegmente (33a, 33b) unterschiedliche Farben aufweisen.

5. Umlaufregal (10) nach einem der vorhergehenden Ansprüche **dadurch gekennzeichnet, dass** die Anzeigevorrichtung (30) einen LED-Spot oder einen Laser-Spot aufweist, der mittels eines Antriebs (34) entlang der Breite (B) der Zugangsöffnung (20) verfahrbar ist.

6. Umlaufregal (10) nach einem der vorhergehenden Ansprüche, **gekennzeichnet durch** eine zwischen den verfahrbaren Tragsätzen (14) und der Arbeitsplatte (22) angeordneten Sicherheitswippe (25), wobei die Lichtstrahlen (32) zwischen der Sicherheitswippe (25) und der Arbeitsplatte (22) zur Kennzeichnung des Lagerguts (16) hindurch strahlen.

7. Umlaufregal (10) nach einem der vorhergehenden Ansprüche, **dadurch gekennzeichnet, dass** die Anzeigevorrichtung (30) vor einer an der Zugangsöffnung (20) vorgesehenen Schiebetür (19) angeordnet ist.

8. Umlaufregal (10) nach einem der vorhergehenden Ansprüche, **gekennzeichnet durch** eine Lichtschranke (40), die ausgebildet ist, eine Position zu erfassen, an welcher eine Bedienperson (100) entlang der Breite (B) der Zugangsöffnung (20) ein Lagergut (16) kommissioniert.

9. Umlaufregal (10) nach einem der vorhergehenden Ansprüche, **dadurch gekennzeichnet, dass** die Anzeigevorrichtung (30) hinter einer lichtdurchlässigen Scheibe (24), insbesondere aus Polymethylmethacrylat, angeordnet ist.

10. Umlaufregal (10) nach einem der vorhergehenden Ansprüche, **dadurch gekennzeichnet, dass** die Anzeigevorrichtung (30) eingerichtet ist, um einen punkförmigen und/oder linienförmigen Lichtstrahl (32) oder ein Anzeigesymbol (38) zu generieren.

11. Verfahren zum Kommissionieren von Lagergut (16) in oder aus dem Umlaufregal (10) gemäß einem der Ansprüche 1 bis 10 aufweisend die Schritte:
a) Eingabe eines Kommissioniervorgangs durch eine Bedienperson (100);
b) Bestimmen des zugeordneten Lagerguts (16a);
c) Verfahren des Lagerguts (16a) zu der Zugangsöffnung (20);
d) Anzeigen der Position des Lagerguts (16a) entlang der Breite (B) der Zugangsöffnung (20) mittels der Anzeigevorrichtung (30); und
e) Durchführen des Kommissioniervorgangs durch die Bedienperson (100).

12. Verfahren nach Anspruch 11, **dadurch gekennzeichnet, dass** eine erste Position eines Lagerguts (16a-1) und zumindest eine zweite Positionen eines anderen Lagerguts (16a-2) zeitgleich oder nacheinander angezeigt werden.

13. Verfahren nach Anspruch 12, **dadurch gekennzeichnet, dass** die erste Position (16a-1) mit einer ersten Farbe gekennzeichnet wird, und die zweite Position (16a-2) mit einer zu der ersten Farbe unterschiedlichen zweiten Farbe gekennzeichnet wird.

14. Verfahren nach einem der Ansprüche 11 bis 13, **dadurch gekennzeichnet, dass** die Position entlang der Breite (B) der Zugangsöffnung (20), an welcher die Bedienperson (100) den Kommissioniervorgang durchführt, mittels der Lichtschranke (40) erfasst und an ein Steuergerät (50) übermittelt wird.

15. Verfahren nach Anspruch 14, **dadurch gekennzeichnet, dass** das Steuergerät (50) die Position entlang der Breite (B) der Zugangsöffnung (20), an welcher die Bedienperson (100) den Kommissioniervorgang durchführt, mit der angezeigten Position vergleicht, und der Bedienperson (100) mittels eines Anzeigesignals der Anzeigevorrichtung (30) anzeigt, ob die Position entlang der Breite (B) der Zugangsöffnung (20) zutreffend ist.

## Claims

1. A carousel rack (10) comprising a housing (12), in which a plurality of carrier sets (14) for storing stored goods (16) are accommodated, which carrier sets (14) can be moved by means of a circulating transport device (18) to at least one access opening (20) provided in the housing (12), a worktop (22) having a work surface (23) arranged in front of the access opening (20), and a display device (30) arranged below the work surface (23), which display device (30) is arranged substantially along the width (B) of the access opening (20) or is movable along the width (B) of the access opening (20), wherein the display device (30) is adapted to illuminate, by means of a light beam (32), a front side (17), facing the operator, of the stored goods (16) located on the carrier set (14), **characterized in that** the display device (30) is configured to be pivotable in order to adjust the light beam (32) in the vertical direction, and **in that** the display device (30) is arranged on a rail (35) which is pivotably mounted in the worktop (22).

2. The carousel rack (10) according to claim 1, **characterized in that** the display device (30) comprises a light strip, in particular an LED strip, or a plurality of LEDs (31).

3. The carousel rack (10) according to claim 1 or 2, **characterized in that** the display device (30) comprises at least one light segment (33) which emits uniform light beams (32), wherein preferably each light segment (33) can be activated individually.

4. The carousel rack (10) according to claim 3, **characterized by** at least two activatable light segments (33a, 33b), wherein the light beams (32) of the at least two activatable light segments (33a, 33b) have different colors.

5. The carousel rack (10) according to any one of the preceding claims, **characterized in that** the display device (30) comprises an LED spot or a laser spot which is movable along the width (B) of the access opening (20) by means of a drive (34).

6. The carousel rack (10) according to any one of the preceding claims, **characterized by** a safety rocker (25) arranged between the movable carrier sets (14) and the worktop (22), wherein the light beams (32) pass between the safety rocker (25) and the worktop (22) in order to identify the stored goods (16).

7. The carousel rack (10) according to any one of the preceding claims, **characterized in that** the display device (30) is arranged in front of a sliding door (19) provided at the access opening (20).

8. The carousel rack (10) according to any one of the preceding claims, **characterized by** a light barrier (40) configured to detect a position at which an operator (100) picks stored goods (16) along the width (B) of the access opening (20).

9. The carousel rack (10) according to any one of the preceding claims, **characterized in that** the display device (30) is arranged behind a light-transmissive pane (24), in particular made of polymethyl methacrylate.

10. The carousel rack (10) according to any one of the preceding claims, **characterized in that** the display device (30) is configured to generate a point-shaped and/or line-shaped light beam (32) or a display symbol (38).

11. A method for picking stored goods (16) into or out of the carousel rack (10) according to any one of claims 1 to 10, comprising the steps of:
a) entering a picking operation by an operator (100);
b) determining the associated stored goods (16a);
c) moving the stored goods (16a) to the access opening (20);
d) displaying the position of the stored goods (16a) along the width (B) of the access opening (20) by means of the display device (30); and
e) performing the picking operation by the operator (100).

12. The method according to claim 11, **characterized in that** a first position of stored goods (16a-1) and at least one second position of other stored goods (16a-2) are displayed simultaneously or sequentially.

13. The method according to claim 12, **characterized in that** the first position (16a-1) is marked with a first color, and the second position (16a-2) is marked with a second color different from the first color.

14. The method according to any one of claims 11 to 13, **characterized in that** the position along the width (B) of the access opening (20) at which the operator (100) performs the picking operation is detected by means of the light barrier (40) and transmitted to a control unit (50).

15. The method according to claim 14, **characterized in that** the control unit (50) compares the position along the width (B) of the access opening (20) at which the operator (100) performs the picking operation with the displayed position, and indicates to the operator (100), by means of a display signal from the display device (30), whether the position along the width (B) of the access opening (20) is correct.

## Revendications

1. Carrousel (10) comprenant un boîtier (12) dans lequel sont logés, pour le stockage d'articles stockés (16), une pluralité d'ensembles de supports (14) qui peuvent être amenés, au moyen d'un dispositif de transport en circuit fermé (18), vers au moins une ouverture d'accès (20) prévue dans le boîtier (12), un plan de travail (22) comportant une surface de travail (23) disposée devant l'ouverture d'accès (20), et un dispositif d'affichage (30) disposé sous la surface de travail (23), ledit dispositif d'affichage (30) étant disposé essentiellement le long de la largeur (B) de l'ouverture d'accès (20) ou étant déplaçable le long de la largeur (B) de l'ouverture d'accès (20), le dispositif d'affichage (30) étant conçu pour éclairer, au moyen d'un faisceau lumineux (32), une face avant (17), tournée vers l'opérateur, des articles stockés (16) se trouvant sur l'ensemble de supports (14), **caractérisé en ce que** le dispositif d'affichage (30) est conçu pour pivoter afin de régler le faisceau lumineux (32) dans la direction verticale, et **en ce que** le dispositif d'affichage (30) est disposé sur un rail (35) monté de manière pivotante dans le plan de travail (22).

2. Carrousel (10) selon la revendication 1, **caractérisé en ce que** le dispositif d'affichage (30) comprend une bande lumineuse, notamment une bande LED, ou une pluralité de LED (31).

3. Carrousel (10) selon la revendication 1 ou 2, **caractérisé en ce que** le dispositif d'affichage (30) comprend au moins un segment lumineux (33) qui émet des faisceaux lumineux (32) uniformes, chaque segment lumineux (33) pouvant de préférence être activé individuellement.

4. Carrousel (10) selon la revendication 3, **caractérisé par** au moins deux segments lumineux activables (33a, 33b), les faisceaux lumineux (32) desdits au moins deux segments lumineux activables (33a, 33b) présentant des couleurs différentes.

5. Carrousel (10) selon l'une quelconque des revendications précédentes, **caractérisé en ce que** le dispositif d'affichage (30) comprend un spot LED ou un spot laser qui est déplaçable le long de la largeur (B) de l'ouverture d'accès (20) au moyen d'un entraînement (34).

6. Carrousel (10) selon l'une quelconque des revendications précédentes, **caractérisé par** une bascule de sécurité (25) disposée entre les ensembles de supports mobiles (14) et le plan de travail (22), les faisceaux lumineux (32) traversant l'espace entre la bascule de sécurité (25) et le plan de travail (22) afin d'identifier les articles stockés (16).

7. Carrousel (10) selon l'une quelconque des revendications précédentes, **caractérisé en ce que** le dispositif d'affichage (30) est disposé devant une porte coulissante (19) prévue au niveau de l'ouverture d'accès (20).

8. Carrousel (10) selon l'une quelconque des revendications précédentes, **caractérisé par** une barrière lumineuse (40) conçue pour détecter une position à laquelle un opérateur (100) prélève un article stocké (16) le long de la largeur (B) de l'ouverture d'accès (20).

9. Carrousel (10) selon l'une quelconque des revendications précédentes, **caractérisé en ce que** le dispositif d'affichage (30) est disposé derrière une vitre translucide (24), notamment en polyméthacrylate de méthyle.

10. Carrousel (10) selon l'une quelconque des revendications précédentes, **caractérisé en ce que** le dispositif d'affichage (30) est conçu pour générer un faisceau lumineux (32) ponctuel et/ou linéaire ou un symbole d'affichage (38).

11. Procédé de prélèvement d'articles stockés (16) dans ou à partir du carrousel (10) selon l'une quelconque des revendications 1 à 10, comprenant les étapes suivantes :
a) saisie d'une opération de prélèvement par un opérateur (100);
b) détermination des articles stockés associés (16a);
c) déplacement des articles stockés (16a) vers l'ouverture d'accès (20);
d) affichage de la position des articles stockés (16a) le long de la largeur (B) de l'ouverture d'accès (20) au moyen du dispositif d'affichage (30); et
e) exécution de l'opération de prélèvement par l'opérateur (100).

12. Procédé selon la revendication 11, **caractérisé en ce qu'**une première position d'articles stockés (16a-1) et au moins une deuxième position d'autres articles stockés (16a-2) sont affichées simultanément ou successivement.

13. Procédé selon la revendication 12, **caractérisé en ce que** la première position (16a-1) est identifiée par une première couleur, et la deuxième position (16a-2) est identifiée par une deuxième couleur différente de la première couleur.

14. Procédé selon l'une quelconque des revendications 11 à 13, **caractérisé en ce que** la position le long de la largeur (B) de l'ouverture d'accès (20) à laquelle l'opérateur (100) effectue l'opération de prélèvement est détectée au moyen de la barrière lumineuse (40) et transmise à une unité de commande (50).

15. Procédé selon la revendication 14, **caractérisé en ce que** l'unité de commande (50) compare la position le long de la largeur (B) de l'ouverture d'accès (20) à laquelle l'opérateur (100) effectue l'opération de prélèvement avec la position affichée, et indique à l'opérateur (100), au moyen d'un signal d'affichage du dispositif d'affichage (30), si la position le long de la largeur (B) de l'ouverture d'accès (20) est correcte.
